# EUROPÄISCHE PATENTSCHRIFT

(11) **EP 3 871 892 B1**
(45) Veröffentlichungstag und Bekanntmachung des Hinweises auf die Patenterteilung: **09.02.2022**
(21) Anmeldenummer: 20159963.6
(22) Anmeldetag: 28.02.2020
(51) Int. Cl.: B41J 29/393, H04N 1/60, B41J 2/21, B41J 2/045, G06T 7/00, B41J 25/00

(54) **MAKULATUROPTIMIERTE DETEKTION**
DETEKTION METHOD TO MINIMIZE MACULATURE
DÉTECTION POUR MINIMISER LES DÉCHETS

(43) Veröffentlichungstag der Anmeldung: 01.09.2021
(73) Patentinhaber: Heidelberger Druckmaschinen AG, 69115 Heidelberg (DE)
(72) Erfinder: Trachanas, Dr. Ilias, 68723 Plankstadt (DE); Abosetta, Mina Hakim Latif, 68169 Mannheim (DE); Fehlner, Dr. Andreas, 68169 Mannheim (DE)

(56) Entgegenhaltungen:
- WO-A1-2015/167561
- WO-A1-2020/022024
- DE-A1-102018 107 105
- DE-A1-102019 208 149
- JP-A- 2013 111 768
- US-A1- 2019 248 153

## Beschreibung

Die vorliegende Erfindung beschäftigt sich mit einem Verfahren zur makulaturoptimierten Detektion und Kompensation defekter Druckdüsen einer Inkjet-Druckmaschine.

Die Erfindung liegt im technischen Gebiet des Digitaldrucks.

Beim Betrieb von Inkjet-Druckmaschinen ist eine der entscheidenden Parameter für die resultierende Bildqualität der erzeugten Druckprodukte der Zustand der Druckdüsen der Inkjet-Druckköpfe, welche in der Druckmaschine verwendet werden. Der Zustand der Druckdüsen kann dabei anhand verschiedener Kennwerte genauer beschrieben werden.

Diese sind z.B. die Druckstärke, auch Amplitude genannt, sowie die Abweichung des Druckpunktes der einzelnen Druckdüse vom jeweiligen Soll-Ort, auch Phase genannt.

Neben diesen beiden wichtigsten Kennwerten sind noch weitere Kennwerte von Bedeutung, z.B. das Ansteuersignal der einzelnen Piezo-Elemente einer jeden Druckdüse, mit denen der Tintenausstoss der einzelnen Druckdüsen reguliert wird. Verschlechtert sich der Status einer Druckdüse, was anhand dieser Kennwerte quantifizierbar und bewertbar ist, kann eine Druckdüse entweder ausfallen oder sich in ihrem Druckverhalten so verschlechtern, dass sie deaktiviert werden muss. In beiden Fällen ist danach eine Kompensation dieser defekten Druckdüse notwendig. Zur Kompensation einer defekten Druckdüse sind verschiedene Ansätze möglich. So kann z.B. eine Ersatzreihe von Druckdüsen vorgehalten werden, welche zum Einsatz kommt, wenn die hauptsächlich für den Druck zuständigen Druckdüsen ausfallen. Dies erfordert allerdings einen erhöhten Konstruktions- und somit Kostenaufwand. Daher bevorzugt man, im Mehrfarbendruck ausgefallene bzw. defekte Druckdüsen mit den anderen Druckfarben an gleicher Stelle der defekten Druckdüse zu kompensieren, oder alternativ im Ein- und Mehrfarbendruck die Kompensation durch einen erhöhten Tintenausstoss direkt benachbarter Druckdüsen.

Zur Detektion solcher defekter Druckdüsen sind nun verschiedene Ansätze bekannt. Diese umfassen z.B.:
1. Die Detektion mittels eines gedruckten und dann ausgewerteten Druckdüsentestmusters
2. Die Detektion mittels einer auf Testbogen gedruckten und dann ausgewerteten Grauwert-/Volltonfläche, da sich bei diesen besonders markant defekte Druckdüsen bemerkbar machen. Die Auswertung der Grauwert-/Volltonfläche kann auch mittels selbstlernender Algorithmen, wie z.B. eines SVM-Modells unterstützt werden.
3. Die Auswertung von Grauwert-/Volltonfläche, aber online während des Fortdrucks
4. Die präventive Detektion mittels Strommessung am Druckkopf.
5. Detektion mittels Suchen von "white lines" (Kamerapixel) im digital erfassten Kundenmotiv.

Diese Ansätze haben jedoch jeweils bestimmte Nachteile. So sind im Fall der Detektion mittels eines gedruckten Druckdüsentestmusters extrem viele Falsch-Positiv-Detektionen bei 100% Detektionsrate, große Makulatur, langsame Detektion von defekten Düsen, z.B. erst nach sieben Bogen falls ein Testmuster pro Bogen farbe-rotierend gedruckt wird, keine Prävention inhärent. Bei der Detektion mittels einer auf Testbogen gedruckten Grauwert-/Volltonfläche gibt es ebenfalls mehr Makulatur, auch hier eine langsame Detektion von defekten Düsen und ebenfalls keine Prävention. Bei der Auswertung von Grauwert-/Volltonfläche, online während des Fortdrucks besteht eine starke Abhängigkeit von den Kompensationsstärken, große Makulatur da mehrere Grauwert-/Volltonflächen an der Bogenhinterkante notwendig sind und ebenfalls keine Prävention geschieht. Die Präventive Detektion mittels Strommessung am Druckkopf erfordert dagegen eine komplexe Hardware, während die Detektion mittels Suchen von "white lines" keine direkte Detektion der eigentlich defekten Druckdüse ermöglicht.

Aus dem deutschen Patent DE 10 2018 202027 B3 ist hierzu ein Verfahren zur Detektion defekter Druckdüsen in einer Inkjet-Druckmaschine mit einem Rechner bekannt, wobei zur Detektion mindestens ein Druckdüsentestmuster sowie ein Flächendeckungselement geometrisch zugeordnet zum mehrzeiligen Druckdüsentestmuster gedruckt wird, beide Elemente von mindestens einem Bildsensor erfasst und vom Rechner ausgewertet werden, wobei vom Rechner defekte Druckdüsen anhand von Schwellwerten detektiert werden können, und die detektierten Druckdüsen dann kompensiert werden, und welches dadurch gekennzeichnet ist, dass vom Rechner durch Auswertung des erfassten Flächendeckungselementes Druckfehler ermittelt werden, diese Druckfehler vom Rechner jeweils einem Bereich geometrisch naheliegender Druckdüsen zugeordnet werden und durch eine Auswertung des Druckdüsentestmusters in diesem Bereich die Druckdüsen bestimmt werden, welche den jeweiligen Druckfehler verursachen.

Aus der Patentanmeldung US 2019/0248153 A1 ist ein Verfahren zur Ermittlung der Fehlfunktion von Druckdüsen in einer Inkjetdruckmaschine bekannt, welches das Drucken eines aus mehreren Reihen bestehenden Druckdüsentestmuster umfasst. Dabei handelt es sich um horizontale Reihen mit gleich beabstandeten vertikalen Linien, welche sich periodisch wiederholen. Weiterhin wird ein Testelement zur Flächenbedeckung neben den Druckdüsentestmustern gedruckt, wobei beide Elemente mit einem Bilderfassungsgerät erfasst werden und in einem Rechner analysiert werden. Der Rechner analysiert das Testelement mit der Flächenbedeckung, um Druckfehler zu erfassen und weist den Druckfehlern entsprechend benachbarte Druckdüsen zu. Eine Analyse des Testelements in der Region der identifizierten Druckdüsen identifiziert die defekten Druckdüsen. Dabei werden die defekten Druckdüsen auf der Basis von Schwellwerten ermittelt, und sodann die ermittelten defekten Druckdüsen kompensiert.

Die Offenlegungsschrift DE 10 2019 208 149 A1 zeigt ebenfalls ein Verfahren zur Detektion und Kompensation defekter Druckdüsen in einer Inkjetdruckmaschine durch einen Rechner, wobei Testmuster von der Inkjetdruckmaschine gedruckt werden, die Testmuster durch mindestens einen Bildsensor erfasst und digitalisiert werden und als digitale Bilddaten an den Rechner weitergeleitet werden. Der Rechner ermittelt dann anhand der digitalen Bilddatenkennwerte für einzelne Druckdüsen eines Druckkopfes und detektiert anhand der Kennwerte defekte Druckdüsen, welche dann wiederum kompensiert werden. Bei diesem Verfahren führt der Rechner die digitalen Bilddaten einem neuronalen Netz zu, welches mittels Trainingsdaten so eingelernt worden ist, dass es auf den zugeführten digitalen Bilddaten die entsprechenden Kennwerte der Druckdüsen eines Druckkopfes ermittelt.

Aus der Offenlegungsschrift WO 2020/022 024 A1 geht ein lernendes System zur Steuerung von Druckmaschinen hervor, welches zunächst Referenzdaten lernt, dann Bildinspektionsdaten lernt und dann Druckfehler lernt. Zudem gibt es einen zweiten Lernschritt für Referenzdaten und einen Vergleichsprozess, mit dem das Modell aktualisiert wird. Das Verfahren dient dazu, Druckprodukte mit sehr hoher Präzision zu erfassen.

Die Offenlegungsschrift DE 10 2018 107 105 A1 betrifft ein Verfahren, bei dem innerhalb eines zu druckenden Nutzdruckbildes ein Analyseteilbereich identifiziert wird, der sich besonders gut für die Erkennung von Druckbildfehlern eignet. Wird auf Basis des Analyseteilbereiches eine mögliche Beeinträchtigung der Druckqualität erkannt, so wird ein Testdruckbild gedruckt, um zu überprüfen, ob auch tatsächlich ein Druckfehler vorliegt. Des Weiteren können auf Basis des Testdruckbildes die Ursachen der Beeinträchtigungen ermittelt und eine Gegenmaßnahme zur Kompensation der Druckbildbeeinträchtigung veranlasst werden.

Aufgabe der vorliegenden Erfindung ist somit, ein Verfahren zur Detektion und Kompensation defekter Druckdüsen vorzustellen, welches effizienter arbeitet als die im Stand der Technik bekannten Verfahren und deren Nachteile so gut wie möglich überwindet.

Gelöst wird diese Aufgabe durch ein Verfahren zur Detektion und Kompensation defekter Druckdüsen einer Inkjet-Druckmaschine mittels eines Rechners gemäß Anspruch 1.

. Der Kern des erfindungsgemäßen Verfahrens besteht also darin, einzelne Elemente der aus dem Stand der Technik bereits bekannten Detektionsverfahren auszuwählen und so miteinander zu verknüpfen, dass jeweils ihre Vorteile erhalten bleiben, aber die Nachteile weitestgehend vermieden werden. Dadurch leistet das erfindungsgemäße Verfahren eine bessere Detektionsqualität als die einzelnen Detektionsverfahren jeweils separat für sich leisten können, wodurch das erfindungsgemäße Verfahren als Effekt der Kombination mehr leistet als die Summe der einzelnen Bestandteile aus dem Stand der Technik. So ist es im vorliegenden Verfahren z.B. nur notwendig, das Druckdüsentestmuster und die mindestens eine Graufläche mit dem Testbogen in der Hochlaufphase zu drucken und auszuwerten und damit das Pixel-Nozzle-Mapping und die Amplituden- und Phasenwertbestimmung der einzelnen Druckdüsen durchzuführen. Damit wird dann ein neuronales Netz in Form eines SVM-Modells eingelernt, welches dann im Fortdruck nur noch die Kundenmotive, also die eigentlich zu druckenden Bildobjekte, überprüft und so zielgenau defekte Druckdüsen ermittelt. Im Fortdruck müssen also keine weiteren Druckdüsentestmuster oder Grauflächen mehr gedruckt und ausgewertet werden, was somit die Makulatur des Druckprozesses entscheidend verringert. Gegenüber dem bereits bekannten Ansatz, von Anfang an nur im Kundenmotiv nach defekten Druckdüsen zu detektieren, hat das erfindungsgemäße Verfahren dagegen den Vorteil, dass es durch das zielgenaue Einlernen des SVM-Modells mit Druckdüsentestmuster und Graufläche durch Überprüfung der jeweiligen Amplituden- und Phasenwerte wesentlich zielgenauer und mit höherer Detektionsqualität arbeitet als das aus dem Stand der Technik bekannte Verfahren.

Vorteilhafte und daher bevorzugte Weiterbildungen des Verfahrens ergeben sich aus den zugehörigen Unteransprüchen sowie aus der Beschreibung mit den zugehörigen Zeichnungen.

Eine bevorzugte Weiterbildung des erfindungsgemäßen Verfahrens ist dabei, dass im Fortdruck weiterhin Strommessungen an den Druckdüsen zwischen dem Druck einzelner Druckbogen durchgeführt und vom Rechner ausgewertet werden, wobei dieser Druckdüsen, welche bei den Strommessungen auffällig sind, präventiv deaktiviert und kompensiert. Damit lässt sich die Detektionsqualität noch um ein weiteres Stück verbessern, da hiermit das SVM-Modell, welches ja ebenfalls auf die Ergebnisse der Strommessung an den Druckdüsen zwischen dem Druck der Testbogen eingelernt ist, auf fortlaufende Strommessungen angewandt werden kann. Da diese fortlaufenden Strommessungen im Fortdruck immer jeweils zwischen dem Druck einzelner Druckbögen geschehen und hierbei auch die Druckgeschwindigkeit nicht verringert werden muss, ist die Performance des Druckprozesses dadurch nicht beeinträchtigt, während gleichzeitig das Detektionsergebnis verbessert wird.

Eine weitere bevorzugte Weiterbildung des erfindungsgemäßen Verfahrens ist dabei, dass der Rechner beim Erfassen und digitalisieren der Testbögen die mindestens eine Graufläche auf potentielle Druckfehler untersucht und die Ergebnisse von Strommessung und Amplituden-/Phasenwertbestimmung derjenigen Druckdüsen, welche in der bestimmten Umgebung der potentiellen Druckfehler liegen, vom Einlernen SVM-Modells ausschließt. Dies ist notwendig, um sicherzustellen, dass die Ergebnisse von Druckdüsen, welche auch sicher innerhalb der vorgegebenen Kennwertgrenzen arbeiten, also nicht defekt sind, zum Einlernen des SVM-Modells verwendet werden. Andernfalls würde man das SVM-Modell mit Druckfehlerdaten einlernen, was die Anwendung des Modells für eine erfolgreiche Detektion verhindern würde. Dabei ist hier zu beachten, dass das SVM-Modell auf Funktionieren der Druckdüsen eingelernt wird, so dass das SVM-Modell Düsen, die von diesem Gutverhalten abweichen, zielsicher detektieren kann. Theoretisch wäre auch der umgekehrte Vorgang denkbar, nämlich dass man das SVM-Modell mit einem Schlechtverhalten entsprechend defekter Druckdüsen einlernt und dann darauf das SVM-Modell detektieren lässt. Damit würde man jedoch im Resultat auf funktionierende Druckdüsen detektieren, was einen massiv erhöhten Aufwand nach sich zöge, da bei einer halbwegs einsatzfähigen Inkjet-Druckmaschine natürlich die überwältigende Mehrzahl aller Druckdüsen einsatzfähig ist.

Eine weitere bevorzugte Weiterbildung des erfindungsgemäßen Verfahrens ist dabei, dass falls der Rechner in der bestimmten Umgebung der potentiellen Druckfehler keine Druckdüsen mit abweichenden Amplituden- und/oder Phasenwerten findet, auf dem Testbogen neben einer Graufläche mit nicht kompensierten Druckdüsen zur Erfassung defekter Druckdüsen und dem Druckdüsentestmuster zur Amplituden/Phasenwertbestimmung drei weitere Grauflächen für den betroffenen Farbauszug gedruckt werden, wobei in den drei Grauflächen jeweils die mittels Pixel-Nozzle-Mapping identifizierte Druckdüse, deren linke Nachbardüse und deren rechte Nachbardüse deaktiviert und kompensiert werden und mittels Auswertung dieser drei Grauflächen der Rechner die, den potentiellen Druckfehler verursachende, Druckdüse ermittelt. Manchmal kann es vorkommen, dass in den gedruckten Grauwertflächen oder alternativ, jedoch nicht erfindungsgemäß, im erzeugten Druckbild Druckfehler vorhanden sind, welche mit größter Wahrscheinlichkeit von einer defekten Druckdüse verursacht werden, jedoch die Amplituden- und Phasenwerte aus dem Druckdüsentestmuster normal erscheinen. In diesem Fall ist in den meisten Fällen die eigentliche Druckdüse, welche den Fehler verursacht, in der Nachbarschaft der untersuchten Region zu finden. Daher werden in diesem Fall in einem der folgenden Testbogen drei weitere Grauflächen gedruckt, wobei dann jeweils die ursprünglich mittels Pixel-Nozzle-Mapping zugeordnete Druckdüse kompensiert wird, und zwar am mittleren Grauwertfeld, sowie die jeweils links und rechts benachbarten Druckdüsen ebenfalls kompensiert, wobei für diese jeweils eine weitere Graufläche gedruckt wird, welche dann entsprechend ausgewertet werden. Mit diesem Vorgehen lässt sich in der Mehrzahl der Fälle die verursachende defekte Druckdüse aufspüren.

Erfindungsgemäß werden während des Fortdrucks potentielle Druckfehler in den erzeugten Kundenmotiven gesucht und dann wird mittels des eingelernten SVM-Modells die den potentiellen Druckfehler verursachende Druckdüse ermittelt. Im Fortdruck wird also das von den Testbögen bekannte Vorgehen einer Ermittlung potentieller defekter Druckdüsen aus den Grauwertflächen auf die gedruckten und vom Bilderfassungssystem erfassten und digitalisierten Kundenmotive übertragen. Das eingelernte SVM-Modell überprüft dann diese potentiellen Druckfehler in den erzeugten Kundenmotiven darauf, ob es sich hierbei um defekte Druckdüsen handelt oder nicht. Es greift dabei auf die aus der Einrichtephase gelernten Zusammenhänge zurück, mit welchen ihm beigebracht wurde, welche Amplituden- und Phasenwerte einer defekten Druckdüse entsprechen und wie diese sich in einem einem Druckbild bzw. Kundenmotiv ähnelnden Grauwertbild als Druckfehler darstellen. Dies gilt ebenfalls für den Zusammenhang der Ergebnisse der Strommessung an den Druckdüsen, welche an der Position der aus der Grauwertfläche ermittelten, potentiellen defekten Druckdüse liegen. Mit diesem Wissen kann das eingelernte SVM-Modell beurteilen, ob Bildfehler im Kundenmotiv Bildfehlern in einer Graufläche entsprechen, die von einer defekten Druckdüse hinsichtlich Amplituden-Phasenwerte und Ergebnis der Strommessung entsprechen.

Eine weitere bevorzugte Weiterbildung des erfindungsgemäßen Verfahrens ist dabei, dass sowohl die Testbögen, als auch die im Fortdruck erzeugten Druckbilder mittels eines Inline-Bilderfassungssystems erfasst, digitalisiert und ausgewertet werden, wobei als Rechner ein Bildverarbeitungsrechner des Inline-Bilderfassungssystems verwendet wird. Zwar wäre es denkbar, auch für das Einlernen des SVM-Modells auf Daten zurückzugreifen, welche extern, also nach dem Ausleger, und nur aufgrund vorliegender bedruckter Testbögen ermittelt worden sind. Jedoch ist dies wesentlich unhandlicher und langsamer als die Verwendung eines ohnehin in den meisten Inkjet-Druckmaschinen vorhandenen Bilderfassungssystems, welches inline arbeitet und damit meist hinter dem letzten Druckwerk installiert wurde. Zudem ist spätestens bei der im Fortdruck notwendigen Untersuchung der erzeugten Produktivbögen eine schnelle Untersuchung derselben mittels des SVM-Modells notwendig, um defekte Druckdüsen innerhalb kürzester Zeit zu detektieren, um somit einen erhöhten Ausschuss, sprich eine erhöhte Makulatur, zu vermeiden. Dies ist mit externen Systemen kaum möglich.

Die Erfindung als solche sowie konstruktiv und/oder funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Figuren zeigen:
- Figur 1:: ein Beispiel einer verwendeten Bogen-Inkjet-Druckmaschine
- Figur 2:: ein Beispiel eines Druckbildes mit einer "white-line"
- Figur 3:: den schematischen Ablauf des erfindungsgemäßen Verfahrens

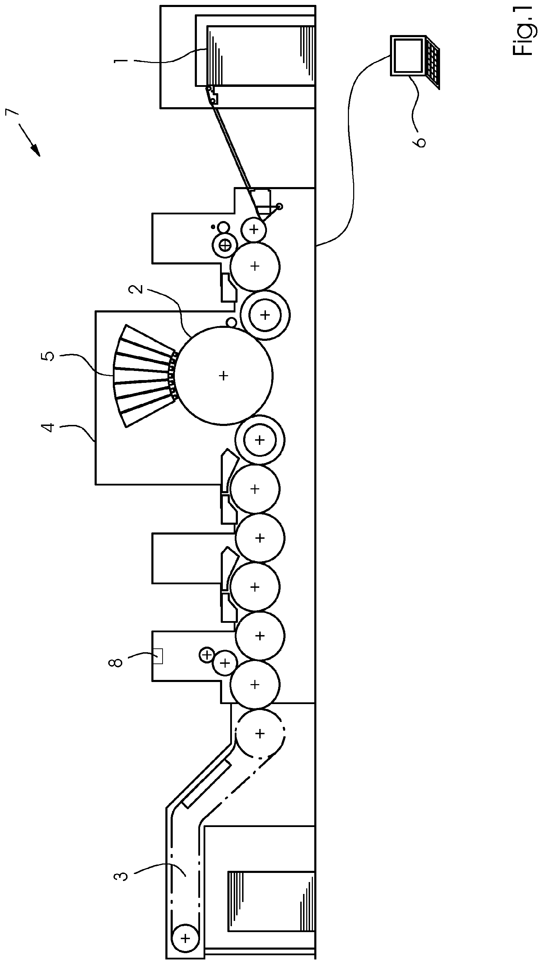

Das Anwendungsgebiet der bevorzugten Ausführungsvariante ist eine InkjetDruckmaschine 7. Ein Beispiel für den grundlegenden Aufbau einer solchen Maschine 7, bestehend aus Anleger 1 für die Zufuhr des Drucksubstrats 2 in das Druckwerk 4, wo es von den Druckköpfen 5 bedruckt wird, bis hin zum Ausleger 3, ist in Figur 1 dargestellt. Dabei handelt es sich hier um eine Bogen-Inkjetdruckmaschine 7, welche von einem Steuerungsrechner 6 kontrolliert wird. Zusätzlich kann auch ein Inline-Bilderfassungssystem 8 vorhanden sein, dessen Kamerasystem nach dem letzten Druckkopf 5 positioniert ist.

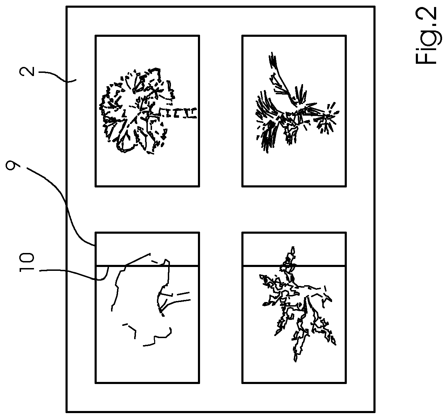

Beim Betrieb dieser Druckmaschine 7 kann es, wie bereits beschrieben, zu Ausfällen einzelner Druckdüsen in den Druckköpfen 5 im Druckwerk 4 kommen. Folge sind dann "white lines" 10, bzw. im Falle eines mehrfarbigen Drucks, verzerrte Farbwerte. Ein Beispiel einer solchen "white line" 10 in einem Druckbild 9 ist in Figur 2 dargestellt.

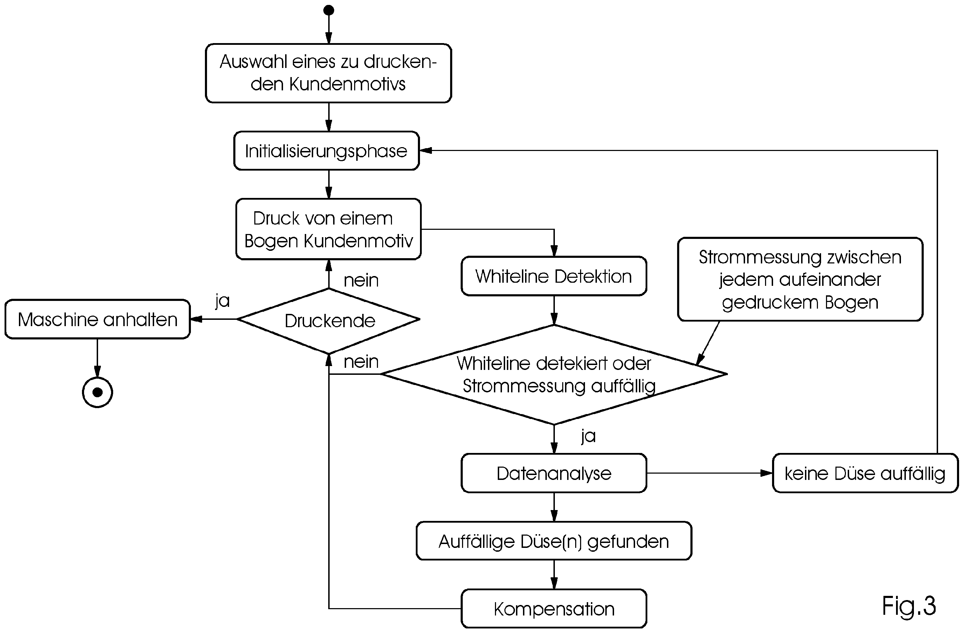

Das erfindungsgemäße Verfahren wird schematisch in Figur 3 dargestellt. Es wird während einer Initialisierungsphase der Inkjetdruckmaschine 7 durchgeführt. Diese kann z.B. nach dem Waschen durchgeführt werden. Dabei wird auf Testbögen 2 ein Druckdüsentestmuster gedruckt und mittels des Bilderfassungssystems 8 ausgewertet. Damit führt ein Rechner 6 dann das Pixel-zu-Nozzle-Mapping durch, mit dem die Bildpixel des vom Bilderfassungssystems 8 digitalisierten Druckdüsentestmusters den Druckdüsen der InkjetDruckmaschine 7 zugeordnet wird. Als Rechner 6 kann der Steuerungsrechner verwendet werden. Bevorzugt wird jedoch ein Bildverarbeitungsrechner des Bilderfassungssystems 8 verwendet.

Zwischen dem Druck der einzelnen Testbögen 2 werden Strommessungen für die einzelnen Druckdüsen durchgeführt. Aus Zeitgründen muss dabei eine komplette Messung aller Druckdüsen immer zyklisch zwischen mehreren Druckbögen erfolgen. Des Weiteren wird eine Grauwertfläche gedruckt und digitalisiert, in welcher der Rechner 6 dann nach Defekten in Form von "white lines" 10 sucht. Die Elemente eines gedruckten Testbogens 2 sind also:
a) Grauwertfläche unkompensiert für die Bestimmung der Artefakte oder "white lines" 10
b) Druckdüsentestmuster für die Bestimmung von Amplitude und Phase
c) 3 Grauwertflächen kompensiert ("mittlere", "linke", "rechte" Druckdüsen) für die Bestimmung der "white lines"-verursachenden Druckdüse im Fall einer "Unauffälligkeit" der Eingangsgrößen für das SVM-Modell (Strommessung, Phase, Amplitude)

In seiner bevorzugten Ausführungsvariante läuft das erfindungsgemäße Verfahren also folgendermaßen ab:
1. Nach dem Waschen wird ein Kundenjob ausgewählt.
2. Die ersten gedruckten Bogen 2 sind Testbögen 2 gemäß der bereits genannten Definition. Es werden möglichst wenige Testbogen 2 gedruckt. Die Anzahl hängt vom Druckformat, von der Anzahl an möglichen Strommessungen zwischen zwei Druckbogen 2 und von der Anzahl der erforderlichen Messelemente für das Training des SVM-Models ab. Wichtig dabei ist, dass eine Mindestanzahl an Strommessungen an verschiedenen Druckdüsen durchgeführt wird z.B. eine Strommessung an mindestens 1000 Düsen.
3. In der erfassten und digitalisierten Grauwertfläche auf dem Testbogen 2 wird pro Farbe nach defekten Stellen, also Kamerapixeln, gesucht. Die Messwerte von Phase, Amplitude und Strommessung der Druckdüsen die in der Umgebung (mittlere Düse ±2 Druckdüsen) der defekten Kamerapixel liegen und somit "defekte Kandidaten-Düsen" darstellen, werden vom Training des SVM-Modells ausgeschlossen, um dieses nur mit "Gutwerten" einzulernen. Mithilfe der gesammelten Information, also Phase, Amplitude, Strommessung der "guten" Druckdüsen, also den "Nicht-Kandidaten", wird das SVM-Modell dann trainiert. Mithilfe des so trainierten SVM-Modells werden dann die defekten Düsen aus den "Kandidaten" identifiziert. Falls es in der Umgebung von mindestens einer "white line" 10 keine auffällige Druckdüse gefunden wird, werden drei kompensierte Grauwertflächen für die betroffene Druckfarbe auf den Testbogen 2 gedruckt: Fläche 1 mit einer Kompensation der "mittleren" Düse; Fläche 2 mit einer kompensierten "linken" Düsen und Fläche 3 mit Kompensation der "rechten" Düse analog zu den "linken" Düsen auf einem neuen Testbogen 2 gedruckt. "Links" und "rechts" bedeutet dabei, pro "defekten" Kamerapixel die laut Pixel-zu-Nozzle-Mapping erste linke, bzw. rechte Nachbardüse der "mittleren" Düse. Mithilfe dieser drei Flächen werden die verursachenden Druckdüsen identifiziert.
4. Anschließend wird das Kundenmotiv 9 selbst in der Fortdruckphase gedruckt. Während dieser Phase wird kontinuierlich sowohl nach "white lines" 10, also defekten Kamerapixeln, im gedruckten Kundenmotiv 9 gesucht, als auch die Strommessung für alle Düsen zyklisch durchgeführt. Falls mindestens eine "white line" 10 im Kundenmotiv 9 erkannt wurde, dann wird mit den vorhandenen Messdaten nach der verursachenden Druckdüse in der Umgebung der "white lines" 10 gesucht. Falls keine auffällige Druckdüse für mindestens eine "white line" 10 gefunden wurde, wird als nächstes nochmal die Initialisierungsphase wiederholt. Zusätzlich werden mithilfe der Strommessung weitere Düsen präventiv abgeschaltet, falls die Grenzwerte der Strommessung verletzt werden.

Das Verfahren funktioniert alternativ, jedoch nicht erfindungsgemäß, auch ohne die Strommessungen der Düsenkanäle. In dieser alternativen Lösung ohne Strommessungen wird das SVM-Modell mit der Phase und der Amplitude trainiert. Anschließend werden während des Druckens des Kundenmotivs 9" white lines" 10, in der Form" defekter" Kamerapixel, im Kundenmotiv 9 gesucht. Die Verursacher-Düse wird dann mithilfe eines Druckdüsentestmusters und der drei kompensierten Grauwertflächen, welche auf einem separaten, eingestreuten Testbogen 2 oder an der Hinter- bzw. Vorderkante eines kommenden Bogens 2 mit Kundenmotiv 9 gedruckt werden, ermittelt.

Die Strommessung resultiert allerdings in einem genaueren SVM-Modell und hilft weniger "Falsch Positiv" und gleichzeitig mehr "True Positiv"-Detektionen zu erreichen. Zudem wird weniger Makulatur verursacht. Daher ist die Ausführungsvariante mit Strommessung besonders bevorzugt.

Das erfindungsgemäße Verfahren hat somit zusammenfassend durch den Verzicht auf Testmuster während des Fortdrucks, wie z.B. Druckdüsentestmusters oder Grauwertflächen an der Hinterkante des Bogens 2 den Vorteil, dass weniger Makulatur anfällt. Zudem wird durch die Kombination von Strommessungen und Daten bzgl. Phase und Amplitude eine Verbesserung der True-Positiv- bzw. Falsch-Positiv-Raten erzielt.

### Bezugszeichenliste

- 1: Anleger
- 2: aktuelles Drucksubstrat / aktueller Druckbogen
- 3: Ausleger
- 4: Inkjet-Druckwerk
- 5: Inkjet-Druckkopf
- 6: Rechner
- 7: Inkj et-Druckmaschine
- 8: Bilderfassungssystem mit Kamera(s)
- 9: Druckbild / Kundenmotiv
- 10: "white lines"

## Patentansprüche

1. Verfahren zur Detektion und Kompensation defekter Druckdüsen einer InkjetDruckmaschine (7) mittels eines Rechners (6), die folgenden Schritte umfassend:
• Druck von Testbogen (2) mit jeweils mindestens einem Druckdüsentestmuster und mindestens einer Graufläche jeweils für jeden verwendeten Farbauszug,
• Erfassen und digitalisieren der Testbogen (2) mit anschließendem Pixel-Nozzle-Mapping und Amplituden-/Phasenwertbestimmung durch den Rechner (6), wobei der Rechner (6) beim Erfassen und digitalisieren der Testbögen (2) die mindestens eine Graufläche auf potentielle Druckfehler untersucht,
• Durchführen von Strommessungen an den Druckdüsen zwischen dem Druck der Testbogen (2),
• Einlernen eines SVM-Modells mit den Ergebnissen von Strommessung und Pixel-Nozzle-Mapping und Amplituden-/Phasenwelibestimmung durch den Rechner (6),
• Anwenden des eingelernten SVM-Modells zur Detektion defekter Druckdüsen im Fortdruck der Inkjet-Druckmaschine (7) auf gedruckte, erfasste und digitalisierte Kundenmotive (9), wobei während des Fortdrucks potentielle Druckfehler in den erzeugten Kundenmotiven (9) gesucht werden und dann mittels des eingelernten SVM-Modells die den potentiellen Druckfehler verursachende Druckdüse ermittelt wird,
• Kompensieren der detektierten, defekten Druckdüsen.

2. Verfahren nach Anspruch 1,
**dadurch gekennzeichnet,**
**dass** im Fortdruck weiterhin Strommessungen an den Druckdüsen zwischen dem Druck einzelner Druckbogen (2) durchgeführt und vom Rechner (6) ausgewertet werden, wobei dieser Druckdüsen, welche bei den Strommessungen auffällig sind, präventiv deaktiviert und kompensiert.

3. Verfahren nach einem der vorherigen Ansprüche,
**dadurch gekennzeichnet,**
**dass** der Rechner (6) beim Erfassen und Digitalisieren der Testbögen (2) die mindestens eine Graufläche auf potentielle Druckfehler untersucht und
die Ergebnisse von Strommessung und Amplituden-/Phasenwertbestimmung derjenigen Druckdüsen, welche in der bestimmten Umgebung der potentiellen Druckfehler liegen, vom Einlernen SVM-Modells ausschließt.

4. Verfahren nach Anspruch 3,
**dadurch gekennzeichnet,**
**dass** falls der Rechner (6) in der bestimmten Umgebung der potentiellen Druckfehler keine Druckdüsen mit abweichenden Amplituden- und/oder Phasenwerten findet, auf dem Testbogen (2) neben einer Graufläche mit nicht kompensierten Druckdüsen zur Erfassung defekter Druckdüsen und dem Druckdüsentestmuster zur Amplituden/Phasenwertbestimmung drei weitere Grauflächen für den betroffenen Farbauszug gedruckt werden, wobei in den drei Grauflächen jeweils die mittels Pixel-Nozzle-Mapping identifizierte Druckdüse, deren linke Nachbardüse und deren rechte Nachbardüse deaktiviert und kompensiert werden und mittels Auswertung dieser drei Grauflächen der Rechner (6) die den potentiellen Druckfehler verursachende Druckdüse ermittelt.

5. Verfahren nach einem der vorherigen Ansprüche,
**dadurch gekennzeichnet,**
**dass** sowohl die Testbögen (2), als auch die im Fortdruck erzeugten Kundenmotive (9) mittels eines Inline-Bilderfassungssystems (8) erfasst, digitalisiert und ausgewertet werden, wobei als Rechner (6) ein Bildverarbeitungsrechner des Inline-Bilderfassungssystems (8) verwendet wird.

## Claims

1. Method of detecting and compensating for defective printing nozzles in an ink jet printing machine (7) by means of a computer (6), comprising the following steps of
• printing test sheets (2), each one including at least one printing nozzle test chart and at least one grey area for every colour separation that is used,
• recording and digitizing the test sheets (2) with subsequent pixel-nozzle mapping and amplitude/phase value determination by means of the computer (6), wherein the computer (6) checks the at least one grey area for potential print defects while recording and digitizing the test sheets (2),
• taking current measurements at the printing nozzles in between the test sheets (2) that are being printed,
• teaching in an SVM model with the results of current measurement and pixel-nozzle mapping and determining amplitude/phase by means of the computer (6),
• applying the taught-in SVM model to printed, recorded and digitized customer's images (9) to detect defective printing nozzles during production printing on the inkjet printing machine (7) wherein potential print defects are searched for in the generated customer's images (9) during production printing and subsequently the printing nozzle that causes the potential defect is determined by means of the taught-in SVM model,
• compensating for the detected defective printing nozzles.

2. Method according to claim 1,
**characterized**
**in that** further current measurements are taken at the printing nozzles during production printing in between individual print sheets (2) that are being printed for them to be evaluated by the computer (6), wherein the latter preventively deactivates and compensates for nozzles that are conspicuous in terms of the current measurements.

3. Method according to any one of the preceding claims,
**characterized**
**in that** when the test sheets (2) are recorded and digitized, the computer (6) examines the at least one gray area to find potential print defects and excludes the results of current measurement and amplitude/phase value determination of those nozzles that are in a defined environment of the potential print defects from the teaching-in of the SVM model.

4. Method according to claim 3,
**characterized**
**in that** if the computer (6) does not find any printing nozzles with deviating amplitude and/or phase values in the specified environment of the potential print defects, three further grey areas for the color separation in question are printed in addition to a grey area without printing nozzle compensation to detect defective printing nozzles and in addition to the printing nozzle test chart for amplitude/phase value determination, wherein the printing nozzle that has been identified by means of pixel-nozzle mapping, the neighboring printing nozzle to the left, and the neighbouring printing nozzle to the right are deactivated and compensated for, and wherein the computer (6) identifies the printing nozzle that causes the potential print defect by evaluating the said three grey areas.

5. Method according to any one of the preceding claims,
**characterized**
**in that** both the test sheets (2) and the customer's images (9) that are produced during production printing are recorded, digitized and evaluated by means of an inline image recording system (8) wherein the computer (6) is an image-processing computer of the inline image recording system (8).

## Revendications

1. Procédé de détection et de compensation de buses d'impression défectueuses d'une machine à imprimer à jet d'encre (7) au moyen d'un ordinateur (6), comprenant les étapes suivantes :
• Impression de feuilles de test (2) avec au moins un échantillon test de buse d'impression et au moins une zone grise pour chaque sélection chromatique utilisée,
• Saisie et numérisation des feuilles de test (2) avec cartographie buses/pixels consécutive et détermination de la valeur d'amplitude/phase par l'ordinateur (6), l'ordinateur (6) examinant la zone grise minimum pour détecter des erreurs d'impression potentielles pendant la saisie et la numérisation des feuilles de test (2),
• Réalisation de mesures de courant sur les buses d'impression entre l'impression des feuilles de test (2),
• Apprentissage d'un modèle SVM avec les résultats de la mesure du courant et de la cartographie buses/pixels et détermination des valeurs d'amplitude/phase par l'ordinateur (6),
• Application du modèle SVM appris pour la détection de buses d'impression défectueuses dans le cycle de production de motifs clients (9) imprimés, saisis et numérisés par la machine à imprimer à jet d'encre (7), des défauts d'impression potentiels étant recherchés dans les motifs clients (9) générés lors du cycle de production et la buse d'impression à l'origine du défaut d'impression potentiel étant ensuite déterminée au moyen du modèle SVM appris,
• Compensation des buses de pression défectueuses détectées.

2. Procédé selon la revendication 1,
**caractérisé en ce**
**que** des mesures de courant continuent d'être effectuées sur les buses d'impression entre l'impression de feuilles imprimées individuelles (2) pendant la production et sont évaluées par l'ordinateur (6), ce dernier désactivant et compensant de manière préventive les buses d'impression présentant des anomalies lors des mesures de courant.

3. Procédé selon l'une des revendications précédentes,
**caractérisé en ce**
**que** l'ordinateur (6), pendant la saisie et la numérisation des feuilles de test (2), examine la zone grise au moins, à la recherche de défauts d'impression potentiels et exclut de l'apprentissage du modèle SVM les résultats de la mesure du courant et de la détermination de la valeur d'amplitude/de phase des buses d'impression qui se trouvent dans l'environnement défini des défauts d'impression potentiels.

4. Procédé selon la revendication 3,
**caractérisé en ce**
**que** si l'ordinateur (6) ne trouve pas de buses d'impression avec des valeurs d'amplitude et/ou de phase divergentes dans l'environnement défini des défauts d'impression potentiels, trois zones grises supplémentaires pour la séparation considérée sont imprimées sur la feuille de test (2) en plus d'une zone grise avec des buses d'impression non compensées pour détecter les buses d'impression défectueuses et le motif de test des buses d'impression pour déterminer la valeur d'amplitude/phase, pour lequel, dans chacune des trois zones grises, la buse d'impression identifiée au moyen de la cartographie buses/pixels, sa buse secondaire gauche et sa buse secondaire droite sont désactivées et compensées et, au moyen de l'évaluation de ces trois zones grises, l'ordinateur (6) détermine la buse d'impression à l'origine du défaut d'impression potentiel.

5. Procédé selon l'une des revendications précédentes,
**caractérisé en ce**
**qu'**aussi bien les feuilles de test (2) que les motifs de client (9) produits dans le cycle de production sont saisis, numérisés et évalués au moyen d'un système de saisie d'images en ligne (8), un ordinateur de traitement d'images du système de saisie d'images en ligne (8) étant utilisé comme ordinateur (6).
